# EUROPÄISCHE PATENTANMELDUNG

(11) **EP 1 259 093 A2**
(43) Veröffentlichungstag der Anmeldung: **20.11.2002**
(21) Anmeldenummer: 02090173.2
(22) Anmeldetag: 14.05.2002
(51) Int. Cl.: H04Q 11/04

(54) **Netzabschlussgerät für ein Telefonnetz**

(30) Priorität: 16.05.2001 DE 10125305; 15.09.2001 DE 10147457
(71) Anmelder: ELMEG GmbH & Co. KG Kommunikationstechnik, 31228 Peine (DE)
(72) Erfinder: Bode, Reinhard, 10243 Berlin (DE); Wohlrab, Knut, 10585 Berlin (DE)
(74) Vertreter: Eisenführ, Speiser & Partner

(57) **Zusammenfassung**

Der Erfindung liegt der Gedanke zu Grunde, ein Netzabschlussgerät vorzusehen, welches in der Lage ist, die Anschlussart (analog/ISDN) automatisch zu erkennen. Das Netzabschlussgerät weist einen telefonnetzseitigen Anschluss sowie eine ISDN-Abschlusseinrichtung (2) auf, welche dazu geeignet sind, das Netzabschlussgerät in einem ISDN-Modus zu betreiben. Das Netzabschlussgerät weist ferner ein Spannungs-Erkennungsmittel (5,7) und ein Schaltmittel (4) auf, wobei das Schaltmittel (4) mit dem telefonnetzseitigen Anschluss, dem Spannungs-Erkennungsmittel und der ISDN-Abschlusseinrichtung verbunden ist. Das Spannungs-Erkennungsmittel (5,7) ist dabei dazu geeignet, einen Spannungsanstieg zu erfassen und im Falle eines derartigen Spannungsanstiegs ein Steuersignal an das Schaltmittel (4) auszugeben. Das Schaltmittel (4) ist hingegen dazu geeignet, das Netzabschlussgerät zwischen einem ISDN- und einem analogen Modus derart umzuschalten, dass die ISDN-Abschlusseinrichtung im ISDN-Modus des Netzabschlussgerätes mit dem telefonnetzseitigen Anschluss verbunden ist. Zur Anschlusserkennung wird die ISDN-Abschlusseinrichtung (2) von dem Schaltmittel (4) zumindest kurzzeitig, sobald das Schaltmittel (4) das Steuersignal von dem Spannungs-Erkennungsmittel (5,7) empfängt, mit dem telefonnetzseitigen Anschluss verbunden. Die ISDN-Abschlusseinrichtung (2) gibt ein für den ISDN-Betrieb charakteristisches Anforderungssignal an den telefonnetzseitigen Anschluss ab und empfängt und detektiert ein für den ISDN-Betrieb charakteristisches Antwortsignal. Das Schaltmittel (4) ist ferner dazu geeignet, im Falle der Detektion des Antwortsignals den ISDN-Modus aufrechtzuerhalten oder bei Ausbleiben des Antwortsignals in den analogen Modus zu schalten.

## Beschreibung

Die vorliegende Erfindung betrifft ein Netzabschlussgerät für ein Telefonnetz.

Bei dem heute üblichen Telefonnetz hat ein Teilnehmer die Möglichkeiten sich beispielsweise zwischen einem analogen Anschluss und einem ISDN-Anschluss zu entscheiden.

Bei einem Wechsel von einem analogen Anschluss zu einem ISDN-Anschluss oder umgekehrt ist es bislang unter anderem notwendig, die angeschlossenen Endgeräte samt den dazugehörigen Steckern auszuwechseln.

Demgegenüber wäre es wünschenswert, ohne großen Aufwand zwischen den Anschlussarten, d. h. analog oder ISDN, zu wechseln.

Daher ist es Aufgabe der Erfindung ein Netzabschlussgerät vorzusehen, welches in der Lage ist, den Wechsel der Anschlussart zu vereinfachen.

Diese Aufgabe der Erfindung wird durch ein Netzabschlussgerät mit den Merkmalen des beigefügten Anspruchs 1 gelöst.

Der Erfindung liegt dabei der Gedanke zu Grunde, ein Netzabschlussgerät vorzusehen, welches in der Lage ist, die Anschlussart (analog/ISDN) automatisch zu erkennen. Das Netzabschlussgerät weist einen telefonnetzseitigen Anschluss sowie eine ISDN-Abschlusseinrichtung auf, welche dazu geeignet sind, das Netzabschlussgerät in einem ISDN-Modus zu betreiben. Das Netzabschlussgerät weist ferner ein Spannungs-Erkennungsmittel und ein Schaltmittel auf, wobei das Schaltmittel mit dem telefonnetzseitigen Anschluss, dem Spannungs-Erkennungsmittel und der ISDN-Abschlusseinrichtung verbunden ist. Das Spannungs-Erkennungsmittel ist dabei dazu geeignet, einen Spannungsanstieg zu erfassen und im Falle eines derartigen Spannungsanstiegs ein Steuersignal an das Schaltmittel auszugeben. Das Schaltmittel ist hingegen dazu geeignet, das Netzabschlussgerät zwischen einem ISDN- und einem analogen Modus derart umzuschalten, dass die ISDN-Abschlusseinrichtung im ISDN-Modus des Netzabschlussgerätes mit dem telefonnetzseitigen Anschluss verbunden ist. Zur Anschlusserkennung wird die ISDN-Abschlusseinrichtung von dem Schaltmittel zumindest kurzzeitig, sobald das Schaltmittel das Steuersignal von dem Spannungs-Erkennungsmittel empfängt, mit dem telefonnetzseitigen Anschluss verbunden. Die ISDN-Abschlusseinrichtung gibt ein für den ISDN-Betrieb charakteristisches Anforderungssignal an den telefonnetzseitigen Anschluss ab und empfängt und detektiert ein für den ISDN-Betrieb charakteristisches Antwortsignal. Das Schaltmittel ist ferner dazu geeignet, im Falle der Detektion des Antwortsignals den ISDN-Modus aufrechtzuerhalten oder bei Ausbleiben des Antwortsignals in den analogen Modus zu schalten.

Die hieraus resultierenden Vorteile liegen insbesondere darin, dass die Anschlussart bzw. der Anschluss-Modus nicht ohne ein eindeutiges Erkennungskriterium gewechselt wird. Ferner wird lediglich der ISDN-Modus geprüft. Der analoge Modus wird nicht explizit geprüft sondern wird aus dem Nichtvorhandensein des ISDN-Modus geschlossen.

Bei einer bevorzugten Ausgestaltung der Erfindung weist das Spannungs-Erkennungsmittel eine Speisespannungs-Erkennungseinheit auf, die dazu geeignet ist, die Speisespannung des Netzabschlussgerätes zu detektieren.

Damit wird erreicht, dass ein Wechsel aus dem ISDN-Modus in den analogen Modus lediglich möglich ist, wenn eine Speisespannung anliegt und einen Antwort Signal empfangen wurde. Ein Unterbrechen der Leitungsspeisung wird ferner zur Initialisierung der automatischen Anschlusserkennung verwendet. Damit ist eine Initialisierung auch durch den Netzbetreiber, d. h. aus der Ferne, möglich, indem die Leitungsspeisung durch den Netzbetreiber reduziert und wieder erhöht wird.

Bei einer besonders bevorzugten Ausgestaltung der Erfindung weist das Spannungs-Erkennungsmittel eine 230 V-Netzspannungs-Erkennungseinheit auf, die dazu ausgestaltet ist, die Netzspannung des Netzabschlussgerät es zu detektieren.

Dabei erweist sich als vorteilhaft, dass die automatische Anschlusserkennung nur erfolgt, wenn die 230 V Netzspannung vorliegt, da aus dem analogen Netz im Ruhezustand nur eine sehr geringe Leistung entnommen werden darf. Eine Wiederkehr der Netzspannung beispielsweise nach einem Netzspannungsausfall wird zur Initialisierung der automatischen Anschlusserkennung verwendet. Ferner kann ein Netzspannungsausfall durch den Teilnehmer, beispielsweise durch Ziehen des Netzsteckers des Netzabschlussgerätes oder durch Betätigen eines Reset-Knopfes, absichtlich verursacht werden, um eine Initialisierung der automatischen Anschlusserkennung zu bewirken.

Bei einer weiteren bevorzugten Ausgestaltung der Erfindung weist das Netzabschlussgerät ein Ruferkennungsmittel auf, welches an den telefonnetzseitigen Anschluss angeschlossen ist und dazu geeignet ist, zu erkennen, ob Rufsignale von dem telefonnetzseitigen Anschluss empfangen werden. Das Schaltmittel ist dabei derart ausgestaltet, dass die Übermittlung des Steuersignals an die ISDN-Abschlusseinrichtung zur Initialisierung der automatischen Anschlusserkennung unterbunden wird, wenn das Ruferkennungsmittel erkannt hat, dass ein Rufsignal von dem telefonnetzseitigen Anschluss empfangen wird.

Während der Umschaltung von dem analogen Modus in den ISDN-Modus oder umgekehrt wird durch die Ruferkennung überwacht, ob ein externer oder ein interner Verbindungswunsch vorliegt. Wenn dies der Fall ist, wird die automatische Anschlusserkennung vertagt und das Netzabschlussgerät bleibt in seinem derzeitigen Modus, so dass das Netzabschlussgerät den Anschluss zu keiner Zeit blockiert.

Nachfolgend werden Ausführungsbeispiele der Erfindung unter Bezugnahme auf die beigefügte Zeichnung näher erläutert. Es zeigen:
- Fig. 1: ein schematisches Blockschaltbild eines Netzabschlussgerätes gemäß einem ersten Ausführungsbeispiel, und
- Fig. 2: ein Blockschaltbild eines Netzabschlussgerätes gemäß einem zweiten Ausführungsbeispiel.

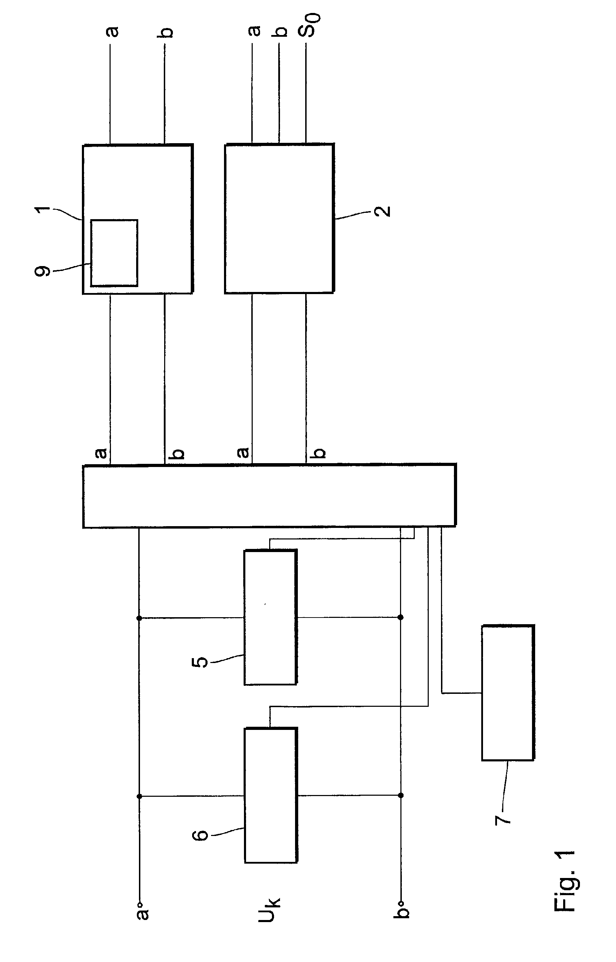

Fig. 1 zeigt ein schematisches Blockschaltbild eines Netzabschlussgerätes gemäß einem ersten Ausführungsbeispiel. Das Netzabschlussgerät weist dabei eine Analog-Abschlusseinrichtung 1, eine ISDN-Abschlusseinrichtung 2, ein Schaltmittel 4, eine Speisespannungs-Erkennungseinheit 5, eine Ruferkennungseinheit 6 und eine Netzspannungs-Erkennungseinheit 7 auf. Das Schaltmittel 4 ist dabei eingangsseitig mit dem telefonnetzseitigen Anschluss a/b, Uₖ, der Ruferkennungseinheit 6, der Speisespannungs-Erkennungseinheit 5, der Netzspannungs-Erkennungseinheit 7 und ausgangsseitig mit der Analog-Abschlusseinrichtung 1 und der ISDN-Abschlusseinrichtung 2 verbunden. Sowohl der Ruferkennungseinheit 6 als auch die Speisespannungs-Erkennungseinheit 5 sind ferner mit dem telefonnetzseitigen Anschluss a/b, Uₖ verbunden. Die Analog-Abschlusseinrichtung 1 weist eine Schleifen-Erkennungseinheit 9 auf.

Eine Initialisierung der automatischen Anschlusserkennung erfolgt nur dann, wenn die Speisespannungs-Erkennungseinheit 5 das Vorhandensein der Speisespannung und die Netzspannungs-Erkennungseinheit 7 das Vorhandensein der Netzspannung detektiert. Die Ruferkennungseinheit 6 und die Schleifen-Erkennungseinheit 9 und dienen der Erkennung von Belegungszuständen. Bei einer bestehenden Belegung oder bei der Detektion eines Rufes findet keine automatische Anschlusserkennung statt.

Wenn die Speisespannungs-Erkennungseinheit 5 eine Speisespannungsunterbrechung bzw. eine minimale Speisespannung oder die Netzspannungs-Erkennungseinheit 7 ein wiederkehrende Netzspannung, beispielsweise nach einem Netzspannungsausfall, erfasst, wird die automatische Anschlusserkennung initialisiert.

Wenn sich das Netzabschlussgerät in dem analogen Modus befindet, wird nach der Feststellung der Unterschreitung der minimalen Speisespannung überprüft, ob eine Belegung oder ein Ruf vorliegt. Bei dem Vorliegen einer Belegung oder eines Rufes findet die automatische Anschlusserkennung nicht statt. Ansonsten schaltete das Schaltmittel 4 das Netzabschlussgerät für einige Sekunden in den ISDN Modus und gibt ein Steuersignal an die ISDN-Abschlusseinrichtung 2 aus, welches bewirkt, dass die ISDN-Abschlusseinrichtung 2 ein ISDN-Anforderung- bzw. Wecksignal an den telefonnetzseitigen Anschluss und somit beispielsweise an eine digitale Ortsvermittlungsstelle DIVO übermittelt. Wenn es sich bei dem fraglichen Anschluss um einen ISDN-Anschluss handelt, wird die digitale Ortsvermittlungsstelle einen Antwortsignal an das Netzabschlussgerät übertragen. Die ISDN-Abschlusseinrichtung 2 empfängt dabei dieses Antwortsignal und leitet es an das Schaltmittel 4 weiter. Wenn das Schaltmittel 4 nach dem Senden des Steuersignals an die ISDN-Abschlusseinrichtung 2 ein Antwortsignal von der ISDN-Abschlusseinrichtung 2 empfängt, steht fest, dass es sich bei dem fraglichen Anschluss um einen ISDN-Anschluss handelt. In diesem Falle belässt das Schaltmittel 4 das Netzabschlussgerät in dem ISDN-Modus. Wenn dies allerdings nicht der Fall ist, d. h. wenn das Schaltmittel 4 nach dem Senden des Steuersignals an die ISDN-Abschlusseinrichtung 2 kein Antwortsignal von der ISDN-Abschlusseinrichtung 2 empfängt, steht fest, dass es sich bei dem fraglichen Anschluss um einen analogen Anschluss handelt. Daher wird die Analog-Abschlusseinrichtung 1 mit dem telefonnetzseitigen Anschluss verbunden, d. h. das Netzabschlussgerät wird in dem analog Modus betrieben.

Wenn sich das Netzabschlussgerät bei der Initialisierung der automatischen Anschluss Erkennung in dem ISDN-Modus befindet, muss das Schaltmittel natürlich keine Anweisung zum Umschalten des Modus ausgeben.

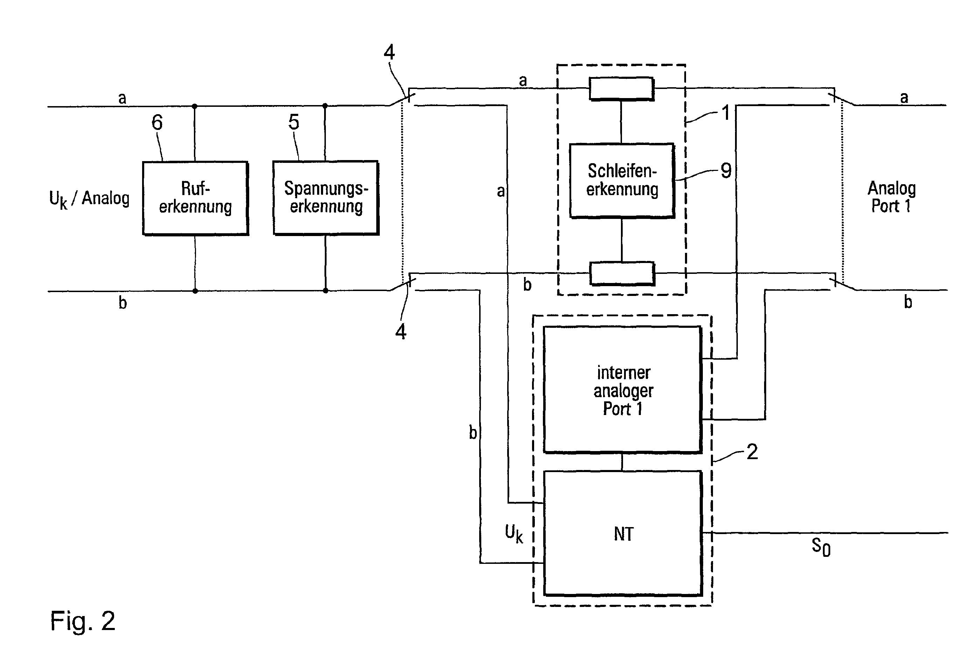

Fig. 2 zeigt ein Blockschaltbild eines Netzabschlussgerätes gemäß einem zweiten Ausführungsbeispiel der Erfindung. Das Netzabschlussgerät weist dabei eine Analog-Abschlusseinrichtung 1, eine ISDN-Abschlusseinrichtung 2, Schalter 4, eine Speisespannungs-Erkennungseinheit 5 und eine Ruferkennungseinheit 6 auf. Das Schaltmittel 4 ist dabei eingangsseitig mit dem telefonnetzseitigen Anschluss a/b, Uₖ, der Ruferkennungseinheit 6 und der Speisespannungs-Erkennungseinheit 5, und ausgangsseitig mit der Analog-Abschlusseinrichtung 1 und der ISDN-Abschlusseinrichtung 2 verbunden. Sowohl die Ruferkennungseinheit 6 als auch die Speisespannungs-Erkennungseinheit 5 sind ferner mit dem telefonnetzseitigen Anschluss a/b, Uₖ verbunden. Die Analog-Abschlusseinrichtung 1 weist eine Schleifen-Erkennungseinheit 9 auf.

Die ISDN-Abschlusseinrichtung 2 setzte sich aus einer Netzesabschlusseinheit NT und einem internen analogen Port zusammen

Eine Initialisierung der automatischen Anschlusserkennung erfolgt nur dann, wenn die Speisespannungs-Erkennungseinheit 5 das Vorhandensein der Speisespannung und die Netzspannungs-Erkennungseinheit 7 das Vorhandensein der Netzspannung detektiert. Die Ruferkennungseinheit 6 und die Schleifen-Erkennungseinheit 9 und dienen der Erkennung von Belegungszuständen. Bei einer bestehenden Belegung oder bei der Detektion eines Rufes findet keine automatische Anschlusserkennung statt

Da aus dem analogen Netz im Ruhezustand so gut wie keine Leistung entnommen werden darf, ist eine automatische Erkennung im Notstrombetrieb, d.h. ohne Netzspannungsversorgung eigentlich nicht möglich. Damit ist eine Rückkehr aus dem Analogmodus ohne Netzspannungsversorgung schwierig.

Daraus ergeben sich folgende Einschränkungen/Erweiterungen:
Das Netzabschlussgerät wechselt nicht ohne eindeutigen Anreiz die Anschlussart. Dies hat zur Folge, das im Fehlerfall nicht in den analogen Zustand zurückgeschaltet wird, da sonst u.U. eine Wiederkehr des ISDN Anschlusses im Notbetrieb nicht gewährleistet ist. Ein Wechsel der Anschlussart Analog zu ISDN und umgekehrt ist nur bei bestehender lokaler 230 V Netzversorgung möglich. Bei Umstellung muss der Kunde darauf hingewiesen werden, den Netzstecker zu stecken. Nach erfolgter Umstellung ist eine Netzversorgung nur noch bei Nutzung des TA (Terminal Adapter) Bedingung. Es wird nur die Anschlussart ISDN eindeutig erkannt. Das Netzabschlussgerät wechselt nur zur Anschlussart Analog, wenn eine Speisespannung anliegt und die Vermittlungsstelle nicht auf die Wecksignale antwortet. Der analoge Modus wird nicht explizit geprüft (Nicht ISDN = Analog). Dieses Vorgehen setzt eine permanente Speicherung der Anschlussart und den damit verbundenen Anschlussmodus des Netzabschlussgerät voraus, d.h. der Netzabschlussgerät nimmt auch im völlig spannungslosen Zustand die eingestellte Anschlussart ein.

Die Überprüfung der Anschlussart findet statt, wenn die Netzspannung nach Netzspannungsausfall wiederkehrt oder wenn die Speisespannung am U_{K0} oder a/b Anschluss wiederkehrt (bei bestehender Netzspannungsversorgung).

Wenn sich das Netzabschlussgerät in einem analogen Modus befindet wird das nachstehende Verfahren durchgeführt, um eine automatische Anschlusserkennung durchzuführen:
- Überprüfung der minimalen Speisespannung; liegt keine ausreichende Speisespannung an erfolgt keine Anschlusserkennung.
- Überprüfung Belegung oder Ruf; bei bestehender Belegung oder Ruf findet keine Anschlusserkennung statt.
- Für einige Sekunden Umschaltung in den ISDN Modus.
- Senden von Wecksignalen.
- Wenn die Wecksignale beantwortet werden liegt ein ISDN Anschluss vor und der Netzabschlussgerät verbleibt dauerhaft im ISDN Modus.
- Wenn die Wecksignale nicht beantwortet werden, wechselt der Netzabschlussgerät wieder dauerhaft in den analogen Modus.
- Eine erneute Überprüfung der Anschlussart findet nur unter den oben genannten Bedingungen statt.

Während der temporären Umschaltung in den ISDN Modus wird die Ruferkennung und die Schleifenerkennung an den internen analogen Ports überwacht. Sollte ein externer (Ruf) oder interner (Hook Off) Verbindungswunsch erkannt werden, wird die Erkennung vertagt und die Schaltung wechselt sofort zurück in den analogen Modus um diese Verbindung zu ermöglichen. Zu keiner Zeit ist der Anschluss blockiert.

Wenn sich das Netzabschlussgerät in einem ISDN-Modus befindet, wird das nachstehende Verfahren durchgeführt, um eine automatische Anschlusserkennung durchzuführen:
- Überprüfung der minimalen Speisespannung; liegt keine ausreichende Speisespannung an erfolgt keine Anschlusserkennung.
- Überprüfung des aktiven Zustandes; befindet sich der Netzabschlussgerät noch im aktiven Zustand (Netzwiederkehr nach Notbetrieb) ist keine Anschlusserkennung notwendig.
- Liegt keine aktiver Zustand vor und liegt eine ausreichende Speisespannung an werden Wecksignale gesendet.
- Wenn die Wecksignale beantwortet werden liegt ein ISDN Anschluss vor und das Netzabschlussgerät verbleibt dauerhaft im ISDN Modus.
- Wenn die Wecksignale nicht beantwortet werden, wechselt der Netzabschlussgerät dauerhaft in den analogen Modus.
- Eine erneute Überprüfung der Anschlussart findet nur unter den in genannten Bedingungen statt.

Die Ruferkennungseinheit 6 ist hochohmig und beeinflusst die analoge sowie die digitale Übertragung nur im zulässigen Maße. Es werden Rufsignale in den vorgegebenen Grenzen erkannt. Die Schaltung dient der Erkennung von Belegungszuständen.

Die Spannungs-Erkennungseinheit 5 überwacht die Speisespannung an der Schnittstelle zur Vermittlungsstelle. Sie spricht auf die minimale gültige Spannung für U_{K0} bzw. analoge Anschlüsse an und arbeitet hochohmig, so dass der Anschluss nur im zulässigen Maße beeinflusst wird. Die Schaltung dient nur der Erkennung der Spannungswiederkehr an der U_{K0} bzw. a/b Schnittstelle und steuert damit den Ablauf der automatischen Erkennung (s.o.). Sie dient nicht der Unterscheidung zwischen digitaler und analoger Anschlussart.

Die Schleifen-Erkennungseinheit 9 arbeitet niederohmig, so dass der Anschluss nur im zulässigen Maße beeinflusst wird. Die Schaltung dient der Erkennung von Belegungszuständen.

## Patentansprüche

1. Netzabschlussgerät für ein Telefonnetz, mit einem telefonnetzseitigen Anschluss, einer ISDN-Abschlusseinrichtung (2), einem Spannungs-Erkennungsmittel (5, 7) und einem Schaltmittel (4), wobei das Schaltmittel (4) mit dem telefonnetzseitigen Anschluss und der ISDN-Abschlusseinrichtung (2) verbunden und dazu ausgestaltet ist, das Netzabschlussgerät zwischen einem ISDN- und einem analogen Modus derart umzuschalten, dass die ISDN-Abschlusseinrichtung (2) im ISDN-Modus des Netzabschlussgerätes mit dem telefonnetzseitigen Anschluss verbunden ist, wobei das Spannungs-Erkennungsmittel (5,7) dazu ausgebildet ist, einen Spannungsanstieg mit einem auf die Ansprechschwelle einstellbaren Schwellwertdetektor zu erfassen und im Falle eines solchen Spannungsanstiegs ein Steuersignal an das Schaltmittel (4) auszugeben, wobei das Schaltmittel (4) ferner dazu ausgestaltet ist, die ISDN-Abschlusseinrichtung (2) zur Anschlusserkennung zumindest kurzzeitig mit dem telefonnetzseitigen Anschluss zu verbinden, wenn das Schaltmittel (4) das Steuersignal von dem Spannungs-Erkennungsmittel (5,7) empfängt, wobei die ISDN-Abschlusseinrichtung (2) dazu ausgestaltet ist, ein für den ISDN-Betrieb charakteristisches Anforderungssignal an den telefonnetzseitigen Anschluss auszugeben und ein für den ISDN-Betrieb charakteristisches Antwortsignal zu empfangen und zu detektieren, wobei das Schaltmittel (4) ferner dazu ausgebildet ist, im Falle der Detektion des Antwortsignals den ISDN-Modus aufrechtzuerhalten oder bei Ausbleiben des Antwortsignals in den analogen Modus zu schalten.

2. Netzabschlussgerät nach Anspruch 1, wobei das Spannungs-Erkennungsmittel (5,7) eine Speisespannungs-Erkennungseinheit (5) aufweist, die dazu ausgestaltet ist, eine an dem telefonnetzseitigen Anschluss anliegende Speisespannung des Netzabschlussgerätes zu detektieren.

3. Netzabschlussgerät nach Anspruch 1 oder 2, wobei das Spannungs-Erkennungsmittel (5,7) eine Netzspannungs-Erkennungseinheit (7) aufweist, die dazu ausgestaltet ist, eine Netzspannung des Netzabschlussgerätes zu detektieren.

4. Netzabschlussgerät nach einem der vorherigen Ansprüche, mit einer Ruferkennungsmittel (6, 9), die an den telefonnetzseitigen Anschluss angeschlossen ist und dazu ausgestaltet ist, zu erkennen, ob Rufsignale von dem telefonnetzseitigen Anschluss empfangen werden, wobei das Schaltmittel (4) ferner dazu ausgestaltet ist, das Übermitteln des Steuersignals an die ISDN-Abschlusseinrichtung (2) zu unterbinden, wenn das Ruferkennungsmittel (6) erkannt hat, dass ein Rufsignal von dem telefonnetzseitigen Anschluss empfangen wird.
